(19) **Europäisches Patentamt**

**European Patent Office**

**Office européen des brevets**

(11) **EP 1 460 449 A1**

(12) **EUROPÄISCHE PATENTANMELDUNG**

(43) Veröffentlichungstag:
**22.09.2004 Patentblatt 2004/39**

(51) Int Cl.[7]: **G01S 7/41**

(21) Anmeldenummer: **04003724.4**

(22) Anmeldetag: **19.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **17.03.2003 DE 10311880**

(71) Anmelder: **EADS Deutschland GmbH**
**85521 Ottobrunn (DE)**

(72) Erfinder: **Nagel, Dieter, Dr.**
**89155 Erbach (DE)**

(74) Vertreter: **Meel, Thomas, Patentassessor**
**c/o Dornier GmbH**
**FCL6**
**88039 Friedrichshafen (DE)**

(54) **Radarverfahren zur Klassifikation oder Identifikation von Helikoptern**

(57)   Die Erfindung betrifft ein Radarverfahren zur Klassifizierung oder Identifizierung von Helikoptern mit den Merkmalen:

- Erzeugung eines eindimensionalen Entfernungsprofils von dem zu klassifizierenden oder zu identifizierenden Helikopter mittels Radar (Ra);

- Ermittlung der Aspektwinkel in Azimut und Elevation bezogen auf die Radarantennenachse (B);

- Vermessung folgender Radarechos in dem eindimensionalen Entfernungsprofil:

    - Radarecho des Helikopterrumpfs,
    - Radarecho des Rotorkopfs des Hauptrotors und/oder das Radarecho der Hauptrotorachse,
    - Radarecho der Heckrotorachse,

- Ermittlung mindestens zwei der folgenden Helikopterparameter aus den vermessenen Radarechos sowie der ermittelten Aspektwinkel:

    - Gesamtlänge des Helikopters,
    - Abstand zwischen den Rotorachsen von Haupt- und Heckrotor,
    - Abstand zwischen dem Bug des Helikopters und der Rotorachse des Hauptrotors,

- Vergleich der ermittelten Helikopterparameter mit gespeicherten Helikopterparameter für verschiedene Helikoptertypen.

Fig. 2

**Beschreibung**

Die Erfindung betrifft ein Radarverfahren zur Klassifizierung oder Identifizierung von Helikoptern.

Bei bekannten Verfahren zur Klassifikation oder Identifikation von Helikoptern werden mittels Radar eindimensionale Entfernungsprofile erzeugt. Diese werden mit gespeicherten Vergleichsprofilen korreliert. Die Vergleichsprofile müssen für jeden Helikoptertyp und für jeden möglichen Aspektwinkel (in Azimut und Elevation) erzeugt werden. Beispielsweise werden in diskreten Schritten Entfernungsprofile für 100 diskrete Azimutwerte (z.B. von -180° bis 180° in 3,6° Schritten) und unabhängig davon für 21 diskrete Elevationswerte (z.B. von -40° bis 40° in 4° Schritten) erzeugt. Es müssen also für einen Hubschraubertyp 100 * 21 = 2100 Entfernungsprofile erzeugt und in einer Datenbank abrufbar sein. Geht man von etwa 40 derzeit gebräuchlichen Helikoptertypen aus, so ergibt sich eine Gesamtzahl von 82.000 benötigten Entfernungsprofilen, um eine sichere Klassifikation durchzuführen.

Der vorliegenden Erfindung liegt die Aufgabe zugrunde, ein Klassifikations- oder Identifikationsverfahren für Helikopter zu schaffen, bei dem der Umfang der Vergleichsdaten wesentlich reduziert werden kann und bei dem die Vergleichsdaten mit geringem Aufwand ermittelt werden können.

Diese Aufgabe wird mit dem Gegenstand des Patentanspruch 1 gelöst. Vorteilhafte Ausführungen sind Gegenstand von Unteransprüchen.

Das erfindungsgemäße Verfahren weist folgende Merkmale auf:

- Erzeugung eines eindimensionalen Entfernungsprofils von dem zu klassifizierenden oder zu identifizierenden Helikopter mittels Radar;

- Ermittlung der Aspektwinkel in Azimut und Elevation bezogen auf die Radarantennenachse;

- Messung der folgenden Radarechos in dem eindimensionalen Entfernungsprofil:

  - Radarecho des Helikopterrumpfs,
  - Radarecho des Rotorkopfs des Hauptrotors und/oder das Radarecho der Hauptrotorachse,
  - Radarecho der Heckrotorachse,

- Ermittlung mindestens zwei der folgenden Helikopterparameter aus den gemessenen Radarechos sowie der ermittelten Aspektwinkel:

  - Gesamtlänge des Helikopters,
  - Abstand zwischen den Rotorachsen von Haupt- und Heckrotor,
  - Abstand zwischen dem Bug des Helikopters und der Rotorachse des Hauptrotors,

- Vergleich der ermittelten Helikopterparameter mit gespeicherten Helikopterparameter für verschiedene Helikoptertypen.

Für die Anwendung der Erfindung werden somit als Vergleichdaten keine Radarmessdaten von Helikoptern benötigt. Als Vergleichsdaten werden lediglich fixe Helikopterparameter benötigt, die aus allgemein zugänglichen Quellen z.B. in Publikationen (Jane's: All the World's Aircraft) oder im Internet (http://fas.org/) erhalten werden können.

Das erfindungsgemäße Verfahren kann sowohl von einer fliegenden (z.B. Helikopter, Kampfflugzeug) als auch von einer stationären Radarantennen-Plattform aus angewandt werden.

Die Erfindung wird unter Bezugnahme auf Figuren näher erläutert. Es zeigen:

Fig. 1     ein vereinfachtes Modell für die Radarstreuung an einem Helikopter,

Fig. 2,3     jeweils ein vereinfachtes Modell für ein Radarentfernungsprofil eines Helikopters,

Fig. 4     ein gemessenes Entfernungsprofil eines Helikopters im Frequenzbereich, gewonnen durch Stepped-Frequency Technik (unten) sowie das entsprechende Entfernungsprofil im Zeitbereich (oben),

Fig. 5     ein durch Anwendung des MUSIC Verfahrens gewonnenes Entfernungsprofil eines Helikopters.

Bei der Aufnahme von Entfernungsprofilen mittels Radar mit hoher Auflösung (Auflösung kleiner als 30 cm, typische Entfernungen im Bereich von 20 bis 30 km) besteht das Videosignal im wesentlichen aus vier Komponenten. Eine entspricht der Rückstreuung am Helikopterrumpf, eine weitere der Rückstreuung am Rotorkopf um die Hauptrotorachse. Die anderen zwei Komponenten gehören zur Streuung an Haupt- und Heckrotor.

Analytisch ergibt sich bei der Erzeugung eines eindimensionalen Entfernungsprofils des Helikopters folgender Ausdruck für das Videosignal:

$$S_{RHel}(t) = \sigma_{skin} \cdot a(t) + \sigma_B \cdot \delta_0(t-T_1) + \sigma_1 \cdot \delta_0(t-T_1) + \sigma_2 \cdot \delta_0(t-T_2)$$

Dabei ist $\sigma_{skin}$ der Radarrückstrahlquerschnitt des Helikopterrumpfs und $a(t)$ beschreibt die Signallänge und Signalform des Helikopterrumpfs. $\sigma_1$ und $\sigma_B$ zusammen mit der Zeit $T_1$ beschreiben den Hauptrotor und den Rotorkopf um die Hauptrotorachse. $\sigma_2$ zusammen mit der Zeit $T_2$ beschreiben den Heckrotor.

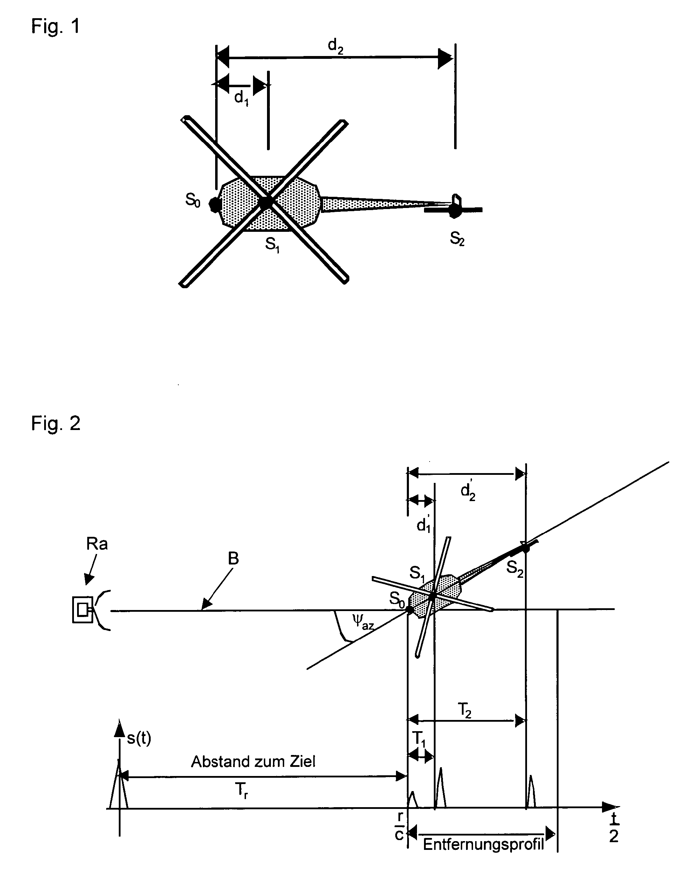

Zur Veranschaulichung zeigt Fig. 1 ein vereinfachtes Modell für die Radarrückstreuung an einem Helikopter (dargestellt in Aufsicht). Die Rückstreuzentren der genannten Komponenten sind mit $S_0$, $S_1$, $S_2$ bezeichnet (die Rückstreuzentren von Hauptrotor und Rotorkopf fallen zusammen). Sie definieren zwei messbare Abstände $d_1$ und $d_2$ am Helikopter. Dabei ist $d_1$ der Abstand zwischen dem Bug des Helikopters und der Rotorachse des Hauptrotors. $d_2$ ist entsprechend die Länge zwischen dem Bug des Helikopters und der Rotorachse des Heckrotors.

Fig. 2 zeigt die Situation (in Aufsichtdarstellung) bei der Erzeugung eines Entfernungsprofils des Helikopters mittels Radar Ra mit einem Aspektwinkel in Azimut $\Psi_{az}$ bezogen auf die Radarantennenachse B. Ebenfalls dargestellt ist das entsprechende Entfernungsprofil mit den Rückstreupeaks für Helikopterrumpf, Rotorkopf/Hauptrotor sowie Heckrotor.

Den Abständen $d_1$, $d_2$ entsprechen die Laufzeiten $T_1$, $T_2$ innerhalb des Ziels (Helikopter).

Für die Bestimmung der Laufzeiten $T_1$, $T_2$ muss der Aspektwinkel in Azimut $\Psi_{az}$ und Elevation $\Psi_{el}$ relativ zur Radarantennenachse B bekannt sein. Die Aspektwinkel werden mittels Extrapolation von Trackingdaten aus vorhergehenden Messungen zur Zieldetektion gewonnen. Sie werden aus der Geschwindigkeit des Ziels sowie der Eigengeschwindigkeit der Antennenplattform ermittelt.

Für die oben definierten Parameter gelten folgende Beziehungen:

$$T_i = \frac{2d_i'}{c} \qquad \underline{d}' = f(\underline{d}, \underline{\psi}) \qquad \underline{d}' = \begin{bmatrix} d_1' \\ d_2' \end{bmatrix} \qquad \underline{\psi} = \begin{bmatrix} \psi_{az} \\ \psi_{el} \end{bmatrix}$$

Durch Ermittlung der Laufzeiten T, kann somit auf die Helikopterparameter d, geschlossen werden. Eine Klassifikation/Identifikation des Helikopters ausschließlich anhand gespeicherter Helikopterparameter wird dadurch ermöglicht.

Die Signalverarbeitung zur Gewinnung der Signallaufzeiten T, ist mit an sich bekannten Verfahren möglich.

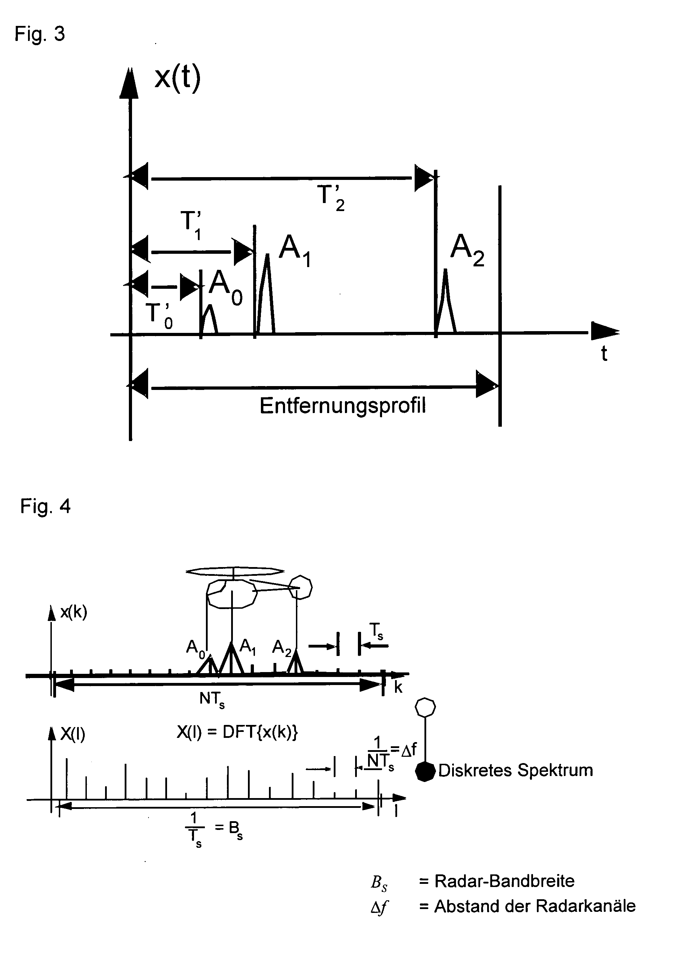

Im Folgenden wird unter Bezugnahme auf die Fig. 3 bis 5 ein Verfahren beispielhaft dargestellt.

Das Helikoptersignal $S_{RHel}(t)$ kann angenähert werden durch ein Signal, welches drei Signalimpulse ("Spikes") im Zeitbereich enthält. Das Signal ist in Fig. 3 dargestellt und dort mit x(t) bezeichnet.

$$x(t) = A_0 \cdot \delta_0(t - T_0') + A_1 \cdot \delta_0(t - T_1') + A_2 \cdot \delta_0(t - T_2')$$

Die Fouriertransformierte $X(f)$ des Signals $x(t)$ ist:

$$X(f) = A_0 \cdot e^{-j2\pi fT'_0} + A_1 \cdot e^{-j2\pi fT'_1} + A_2 \cdot e^{-j2\pi fT_2'}$$

Bei Anwendung des dem Fachmann bekannten Stepped Frequency Verfahrens wird direkt diese Fouriertransformierte gemessen, die in Form diskreter Abtastwerte $X(l\Delta f)$ vorliegt (siehe Fig. 4 unten), wobei $\Delta f$ die Frequenzdifferenz der einzelnen Radarkanäle und $l = 1, \ldots, N$ die Anzahl der Radarkanäle ist.

Zur Abschätzung der Laufzeitparameter $T_0'$, $T_1'$, $T_2'$ (diese sind gegenüber den obengenannten Laufzeiten $T_i$ auf einen anderen - beliebigen - Nullpunkt bezogen) können vorteilhaft dem Fachmann bekannte hochauflösende Verarbeitungstechniken ("super resolution techniques") wie z.B. Maximum Likelihood Estimation, Maximum Entropy Estimation und MUSIC Estimation eingesetzt werden. Das MUSIC Verfahren (Mutiple Signal Classification) ist z.B. in R.O. Schmidt in IEEE Transactions on Antennas and Propagation, Vol. AP-34, No 3, März 1986, Seiten 276 - 280 beschrieben. Ziel dieser Verfahren ist es, aus der gemessenen Fouriertransformierten $X(l\Delta f)$ im Frequenzbereich eine Abschätzung für das entsprechende Signal x($k$) im Zeitbereich (Fig. 4 oben) zu gewinnen.

Für diese Abschätzung wird - wie bereits oben erläutert - angenommen, dass der interessierende Teil des Helikopterprofils im Zeitbereich aus drei Impulsen ("Spikes") besteht. Im Frequenzbereich entsprechen diese Spikes drei monochromatischen Signalen.

Das Modellsignal S($l$) ist somit, mit $l$ = 1, ... , N:

$$S(l) = A \cdot e^{-j2\pi\Delta flT}$$

Das gemessene Signal ist Y($l$) = X($l$) + W($l$), $l$ = 1, ... , N, mit den Rauschwerten W($l$). In Vektorschreibweise ergibt sich folgende Darstellung: $\underline{Y} = \underline{X} + \underline{W}$.

Die Korrelationsmatrix $\underline{M}$ ist: $\underline{M} = \underline{Y}\,\underline{Y}^*$.

Die Abschätzung gemäß dem Verfahren der Maximum Likelihood Estimation ergibt:

$$P_{ML}(T) = \frac{1}{S^*(T)M^{-1}S(T)}$$

Bei Anwendung der Maximum Entropy Estimation ergibt sich folgende Abschätzung:

$$P_{ME}(T) = \frac{1}{S^T(T)M^{-1}M^{-1*}S^*(T)}$$

Die Abschätzung gemäß dem MUSIC Verfahren ergibt:

$$P_{MU}(T) = \frac{1}{S^T(T)\Phi_M\Phi_M{}^*S^*(T)}$$

wobei $\Phi_M$ eine zu den Rauscheigenwerten gehörende Untermatrix ist. Unter der Annahme von drei Spikes im Helikopterentfernungsprofil ergeben sich N-3 Rauscheigenwerte.

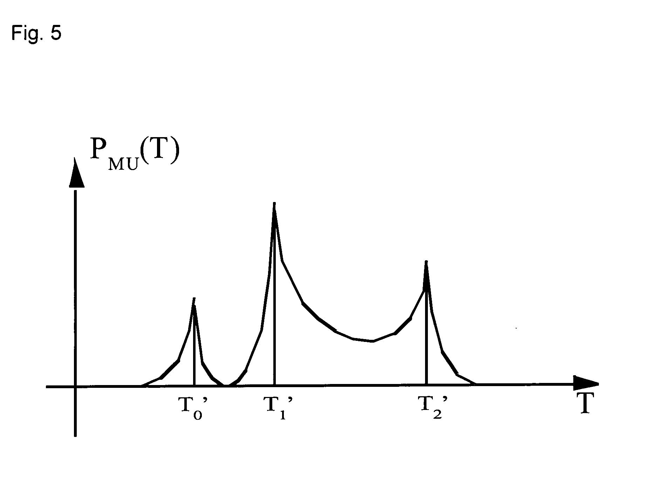

Fig. 5 zeigt ein Helikopterentfernungsprofil im Zeitbereich, das durch Abschätzung mit dem MUSIC Verfahren aus dem gemessenen Entfernungsprofil im Frequenzbereich gewonnen wurde. Mit den darin enthaltenen Werten für $T_0$, $T_1$, $T_2$ können bei Kenntnis der Aspektwinkel $\Psi_{az}$, $\Psi_{el}$ die gesuchten Helikopterparameter unmittelbar berechnet werden.

**Patentansprüche**

1.   Radarverfahren zur Klassifizierung oder Identifizierung von Helikoptern mit den Merkmalen:

- Erzeugung eines eindimensionalen Entfernungsprofils von dem zu klassifizierenden oder zu identifizierenden Helikopter mittels Radar (Ra);

- Ermittlung der Aspektwinkel in Azimut und Elevation bezogen auf die Radarantennenachse (B);

   **gekennzeichnet durch** folgende Merkmale:

- Vermessung folgender Radarechos in dem eindimensionalen Entfernungsprofil:

   - Radarecho des Helikopterrumpfs,
   - Radarecho des Rotorkopfs des Hauptrotors und/oder das Radarecho der Hauptrotorachse,
   - Radarecho der Heckrotorachse,

- Ermittlung mindestens zwei der folgenden Helikopterparameter aus den vermessenen Radarechos sowie der ermittelten Aspektwinkel:

- Gesamtlänge des Helikopters,
- Abstand zwischen den Rotorachsen von Haupt- und Heckrotor,
- Abstand zwischen dem Bug des Helikopters und der Rotorachse des Hauptrotors,

- Vergleich der ermittelten Helikopterparameter mit gespeicherten Helikopterparameter für verschiedene Helikoptertypen.

2. Verfahren nach Anspruch 1, **dadurch gekennzeichnet, dass** die Erzeugung des eindimensionalen Entfernungsprofils mittels eines Stepped Frequency Verfahrens unmittelbar im Frequenzbereich erfolgt.

3. Verfahren nach Anspruch 2, **dadurch gekennzeichnet, dass** die Vermessung der Radarechos unter Einsatz sogenannter "Super Resolution Verfahren" wie z.B. Maximum Likelihood Estimation, Maximum Entropy Estimation oder MUSIC Estimation erfolgt.

Fig. 1

Fig. 2

Fig. 3

$x(t)$

$T'_2$

$T'_1$

$A_1$

$A_2$

$A_0$

$T'_0$

$t$

Entfernungsprofil

Fig. 4

$x(k)$

$T_s$

$A_0$ $A_1$ $A_2$

$NT_s$

$k$

$X(l)$

$X(l) = DFT\{x(k)\}$

$\dfrac{1}{NT_s} = \Delta f$

Diskretes Spektrum

$\dfrac{1}{T_s} = B_s$

$l$

$B_s$ = Radar-Bandbreite

$\Delta f$ = Abstand der Radarkanäle

Fig. 5

$$P_{MU}(T)$$

$T_0'$  $T_1'$  $T_2'$  $T$

**Europäisches Patentamt**

# EUROPÄISCHER RECHERCHENBERICHT

Nummer der Anmeldung

EP 04 00 3724

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 38 29 393 A (GEN ELECTRIC) 23. Mai 1990 (1990-05-23) * Spalte 1, Zeile 48 - Spalte 2, Zeile 50 * * Spalte 4, Zeile 5 - Spalte 5, Zeile 10 * * Spalte 6, Zeilen 9-18 * * Abbildungen 1,4a,4b * | 1-3 | G01S7/41 |
| X | DE 36 21 661 A (GEC AVIONICS) 6. Dezember 1990 (1990-12-06) * Spalte 1, Zeile 21 - Spalte 2, Zeile 50; Abbildungen 2,4 * | 1 | |
| A | US 4 470 048 A (SHORT III ROBERT D) 4. September 1984 (1984-09-04) * Spalte 1, Zeilen 10-34; Abbildungen 1,2 * * Spalte 1, Zeile 44 - Spalte 2, Zeile 53 * | 1,3 | |
| A | GB 2 298 330 A (MARCONI GEC LTD) 28. August 1996 (1996-08-28) * Zusammenfassung; Abbildung 6 * * Seiten 2,10,11 * | | RECHERCHIERTE SACHGEBIETE (Int.Cl.7) G01S |
| A | ZYWEEK A ET AL: "RADAR TARGET RECOGNITION USING RANGE PROFILES" PROCEEDINGS OF THE INTERNATIONAL CONFERENCE ON ACOUSTICS, SPEECH, ANDSIGNAL PROCESSING (ICASSP). SPEECH PROCESSING 2, AUDIO, UNDERWATER ACOUSTICS, VLSI AND NEURAL NETWORKS. ADELAIDE, APR. 19 - 22, 1994, PROCEEDINGS OF THE INTERNATIONAL CONFERENCE ON, Bd. VOL. 2 CONF. 19, 19. April 1994 (1994-04-19), Seiten II-373, XP000528497 ISBN: 0-7803-1776-9 * Abbildungen 1,2 * | 1-3 | |

Der vorliegende Recherchenbericht wurde für alle Patentansprüche erstellt

| Recherchenort | Abschlußdatum der Recherche | Prüfer |
|---|---|---|
| München | 9. Juni 2004 | Schmelz, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**   EP 04 00 3724

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-06-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 3829393 | A | 23-05-1990 | NL | 8801976 A | 01-03-1990 |
| | | | DE | 3829393 A1 | 23-05-1990 |
| | | | FR | 2646717 A1 | 09-11-1990 |
| | | | US | 4972193 A | 20-11-1990 |
| DE 3621661 | A | 06-12-1990 | DE | 3621661 A1 | 06-12-1990 |
| | | | FR | 2646922 A1 | 16-11-1990 |
| | | | GB | 2229027 A ,B | 12-09-1990 |
| | | | IT | 1229629 B | 04-09-1991 |
| | | | SE | 8602879 A | 30-11-1990 |
| | | | US | 5012252 A | 30-04-1991 |
| US 4470048 | A | 04-09-1984 | KEINE | | |
| GB 2298330 | A | 28-08-1996 | KEINE | | |

EPO FORM P0461

Für nähere Einzelheiten zu diesem Anhang : siehe Amtsblatt des Europäischen Patentamts, Nr.12/82